# EUROPÄISCHE PATENTSCHRIFT

(11) **EP 0 486 102 B1**
(45) Veröffentlichungstag und Bekanntmachung des Hinweises auf die Patenterteilung: **18.05.1994**
(21) Anmeldenummer: 91202931.1
(22) Anmeldetag: 12.11.1991
(51) Int. Cl.: H05G 1/44, H05G 1/64, G01N 23/04, G01T 1/29

(54) **Röntgenuntersuchungsgerät**
X-ray examining device
Dispositif d'examen utilisant les rayons X

(30) Priorität: 14.11.1990 DE 4036163
(43) Veröffentlichungstag der Anmeldung: 20.05.1992
(73) Patentinhaber: Philips Patentverwaltung GmbH, 22335 Hamburg (DE); Philips Electronics N.V., 5621 BA Eindhoven (NL)
(72) Erfinder: Schiebel, Ulrich, Dr., W-5100 Aachen (DE); Wieczorek, Herfried, Dr., W-5100 Aachen (DE); Meulenbrugge, Hendrik, NL-5505 AC Veldhoven (NL)
(74) Vertreter: von Laue, Hanns-Ulrich, Dipl.-Ing.

(56) Entgegenhaltungen:
- EP-A- 0 266 819
- EP-A- 0 287 197
- DE-A- 3 732 634
- DE-A- 3 842 649
- US-A- 4 366 382
- OPTICAL ENGINEERING, Bd. 26, Nr. 10, 1. Oktober 1987, BELLINGHAM US Seiten 1055 - 1060; J.P. DOTY ET AL.: 'DESIGN OF LOW NOISE, HIGH PERFORMANCE X-RAY CHARGE-COUPLED-DEVICE CAMERAS'

## Beschreibung

Die Erfindung betrifft ein Röntgenuntersuchungsgerät mit einer Sensor-Matrix mit in Zeilen und Spalten angeordneten Sensoren, die je ein röntgenstrahlenempfindliches Fotosensorelement, eine diesem parallel geschaltete Speicherkapazität und einen elektrischen Schalter aufweisen, wobei die Fotosensorelemente und die Speicherkapazitäten jeweils mit ihren ersten Elektroden an einer mit einer Gleichspannungsquelle verbundenen Gegenelektrode und mit ihren zweiten Elektroden an den elektrischen Schalter angeschlossen sind.

Ein derartiges Röntgenuntersuchungsgerät (siehe z.B. EP-A-0266819) weist eine Sensor-Matrix mit einer Vielzahl von Sensoren, beispielsweise 2000 mal 2000 in Spalten und Zeilen angeordneten Sensoren. Jeder dieser Sensoren weist ein röntgenstrahlenempfindliches Fotosensorelement auf. Dem Fotosensorelement ist in jedem Sensor eine Speicherkapazität parallel geschaltet. Als Speicherkapazität kann dabei beispielsweise die parasitäre Kapazität des Fotosensorelementes dienen. Die jeweils ersten Elektroden des Fotosensorelements und der Speicherkapazität sind mit einer mit einer je nach Schaltung des Fotosensorelementes positiven oder negativen Gleichspannung beaufschlagten Gegenelektrode verbunden. Die beiden anderen Elektroden des Fotosensorelementes und der Speicherkapazität sind über einen elektrischen Schalter an eine Ausleseleitung schaltbar. Vor Durchführung einer Röntgenbelichtung, in deren Verlauf ein Untersuchungsobjekt mit den Röntgenstrahlen belichtet wird, werden die elektrischen Schalter aller Sensoren kurzzeitig geschlossen, also leitend geschaltet. Nach Durchführung der Belichtung werden die Schalter der Sensoren wiederum geschlossen, damit die in den Speicherkapazitäten nach der Röntgenbelichtung gespeicherten Ladungen ausgelesen werden können. Dieses Auslesen geschieht jedoch nicht für alle Sensoren gleichzeitig. Es können gleichzeitig nur so viele Sensoren ausgelesen werden wie Ausleseleitungen in der Sensormatrix vorgesehen sind. Diejenigen Sensoren, die mit einer gemeinsamen Ausleseleitung verbunden sind, werden zeitlich sequentiell ausgelesen.

Für derartige Röntgenuntersuchungsgeräte sind keine Vorrichtungen zur Messung der Intensität der Röntgenbelichtung bekannt. Für Röntgenuntersuchungsgeräte, die mit einem Röntgenbildverstärker und optisch gekoppelten Kameras arbeiten, ist es bekannt, das verstärkte Licht am Ausgangsschirm des Röntgenbildverstärkers optisch auszukoppeln und einem Lichtdetektor zur Messung der Intensität der Belichtung zuzuführen. Eine derartige, beispielsweise aus der EP-A-0 200 272 bekannte Anordnung, ist jedoch auf ein Röntgenuntersuchungsgerät der eingangs genannten Art nicht übertragbar.

Der Erfindung liegt die Aufgabe zugrunde, für ein Röntgenuntersuchungsgerät der eingangs genannten Art eine Anordnung zur Messung der Belichtung anzugeben.

Zur Lösung dieser Aufgabe wird ein Röntgenuntersuchungsgerät gemäß Anspruch 1 vorgeschlagen.

Bei Röntgenuntersuchungsgeräten mit der eingangs näher beschriebenen Sensormatrix besteht das Problem, daß die Menge der ausgelesenen Ladungen und damit auch die Intensität der Belichtung erst beim Auslesevorgang der Ladungen aus den Speicherkapazitäten festgestellt wird. Dieser Zeitpunkt ist aber zu spät, da zu diesem Zeitpunkt die Belichtung bereits erfolgt und abgeschlossen ist. Der Erfindung liegt nun die Erkenntnis zugrunde, daß auch während der Belichtung in den Sensoren und in den nicht leitend geschalteten elektrischen Schaltern geringe Ströme fließen, die zur Messung der Belichtung herangezogen werden können. Diese geringen Ströme resultieren daraus, daß die elektrischen Schalter praktisch nicht vermeidbare parasitäre Kapazitäten aufweisen, über die auch während des Belichtungsvorganges Ladungen fließen können. Diese Ströme fließen einerseits durch die Gegenelektrode jedes Sensors und andererseits durch den elektrischen Schalter. Die Messung der Belichtung kann alternativ oder auch gemeinsam an diesen beiden Stellen vorgenommen werden. Die fließenden Ströme sind proportional des Momentanwertes der Belichtung und können so ohne weiteres zur Messung oder Korrektur der Belichtung herangezogen werden.

In einer ersten Ausgestaltung der Erfindung ist vorgesehen, daß jeweils eine vorgegebene Anzahl von Sensoren einer Spalte der Matrix eine Gruppe bildet, daß für jede Gruppe eine gemeinsame Ausleseleitung mit je einem Ausleseverstärker für die Ladungsauslesung vorgesehen ist, und daß die Ausleseverstärker auch zur Messung der während der Belichtung fließenden Ströme herangezogen werden, die der Belichtungsmessung und/oder der Belichtungskorrektur dienen.

Wie bereits eingangs erwähnt, ist eine vorgegebene Anzahl von Sensoren über deren elektrische Schalter mit einer gemeinsamen Ausleseleitung verbunden. Für die Erstellung des Röntgenbildes ist in dieser Ausleseleitung ohnehin jeweils ein Ausleseverstärker vorgesehen, mittels dessen die ausgelesenen Ladungen verstärkt werden. Diese Ausleseverstärker der verschiedenen Ausleseleitungen können nun während des Vorganges der Röntgenbelichtung bereits zur Ermittlung der dann fließenden Ströme und somit für die Belichtungsmessung oder auch die Korrektur der Belichtung herangezogen werden.

Damit der Aufbau der Sensor-Matrix möglichst einfach ist, kann vorgesehen sein, daß jeweils alle Sensoren einer Spalte der Matrix eine Gruppe mit einer gemeinsamen Ausleseleitung und einem Ausleseverstärker bilden.

In einer zweiten Ausgestaltung der Erfindung ist vorgesehen, daß jeweils vorgegebene Anzahl von Sensoren eine Gruppe bildet und daß für jede Gruppe eine gemeinsame Gegenelektrode vorgesehen ist, an die jeweils ein Verstärker geschaltet ist, mittels dessen während der Röntgenbelichtung die jeweils in den Gegenelektroden fließenden Ströme gemessen werden, die der Belichtungsmessung und/oder der Belichtungskorrektur dienen.

Wie oben bereits erwähnt, kann die Messung der während der Röntgenbelichtung fließenden Ströme einerseits dadurch erfolgen, daß die durch die elektrischen Schalter fließenden Ströme gemessen werden. Es besteht aber auch die Möglichkeit, die durch die Gegenelektroden der Sensoren fließenden Ströme zu messen. Hierzu wird eine vorgegebene Anzahl von Sensoren, die eine gemeinsame Gruppe bilden, mit einer gemeinsamen Gegenelektrode versehen. An diese Gegenelektrode ist ein Verstärker geschaltet, welcher die durch die Gegenelektrode fließenden Ströme verstärkt. Diese Ströme werden zur Belichtungsmessung und/oder Belichtungskorrektur eingesetzt. Bei dieser Ausführungsform ist zwar ein zusätzlicher Verstärker je Gegenelektrode erforderlich, es besteht jedoch der Vorteil, daß die während der Röntgenbelichtung durch die Gegenelektrode fließenden Ströme größer sind als die durch die Ausleseleitung fließenden Ströme. Es muß hier also eine geringere Verstärkung vorgesehen werden bzw. es wird ein besseres Nutzsignal/Rauschverhältnis erzielt.

Bei dieser Ausführungsform des Röntgenuntersuchungsgeräts hat es sich als vorteilhaft erwiesen, daß die vorgegebene Anzahl von Sensoren, für die jeweils eine gemeinsame Gegenelektrode vorgesehen ist, zwischen zwei mal zwei und acht mal acht beträgt.

In weiterer Ausgestaltung der Erfindung ist vorgesehen, daß für jede Gruppe von Sensoren mit einer gemeinsamen Ausleseleitung bzw. einer gemeinsamen Gegenelektrode eine individuelle Belichtungsmessung vorgesehen ist.

Sowohl für den Fall, daß die Belichtungsmessung über die Ausleseverstärker einer Elektrodengruppe stattfindet, wie auch für den Fall, daß in der gemeinsamen Gegenelektrode einer Gruppe von Sensoren ein Verstärker zur Messung der Ströme während der Belichtung vorgesehen ist, kann für jeweils eine Gruppe von Sensoren eine individuelle Belichtungsmessung vorgenommen werden. Es ist auf diese Weise also möglich, für einzelne Bildbereiche eine getrennte Belichtungsmessung vorzunehmen. Dies kann insbesondere vorteilhaft sein, um bestimmte interessierende Bereiche eines Untersuchungsobjektes richtig zu belichten.

Dazu ist vorteilhaft, nach einer weiteren Ausgestaltung der Erfindung, eine Steuereinrichtung vorgesehen, welche in Abhängigkeit der Belichtungsmessung bzw. der individuellen Belichtungsmessungen eine Steuerung der Belichtungsintensität und/oder der Belichtungsdauer vornimmt. Die Steuereinrichtung kann die laufende Intensität der Belichtung mittels Messung der Ströme ermitteln und gegebenenfalls die Belichtungsintensität korrigieren. Außerdem, oder auch zusätzlich, besteht die Möglichkeit, je nach Belichtungsintensität die Dauer der Belichtung zu variieren, so daß eine Gesamt-Strahlendosis in gewünschter Höhe erreicht wird.

In einer weiteren Ausgestaltung der Erfindung ist vorgesehen, daß in der Steuereinrichtung die individuellen Belichtungsmessungen je nach Lage der Sensoren der verschiedenen Gruppen verschieden gewichtet werden. Wie oben bereits erwähnt, sollen insbesondere bestimmte Bereiche des Bildes bzw. bestimmte Bereiche des Untersuchungsobjektes richtig belichtet werden. Dazu ist es vorteilhaft, die Ströme derjenigen Sensoren bei der Belichtungsmessung stärker zu gewichten, die in den Bereichen des Untersuchungsobjektes liegen, die schwerpunktmäßig richtig belichtet werden sollen.

Dabei besteht die Möglichkeit, wie nach einer weiteren Ausgestaltung der Erfindung vorgesehen ist, daß die Steuereinrichtung bei der Gewichtung der verschiedenen individuellen Belichtungsmessungen je nach vorgegebener Untersuchungsart auf eine auf diese Untersuchung zuvor angepaßte Bewertungstabelle zurückgreift. Eine derartige Bewertungstabelle kann aus früheren Untersuchungen quasi als Erfahrungswert abgespeichert sein. Dabei können verschiedene Untersuchungsarten vorgesehen sein, für die jeweils eine angepaßte Bewertungstabelle vorliegt, auf die während der Belichtung zurückgegriffen werden kann.

Für besondere Fälle besteht aber auch die Möglichkeit, wie nach einer weiteren Ausgestaltung vorgesehen ist, daß die verschiedenen Gewichtungen der individuellen Belichtungsmessungen durch manuelle Auswahl vorgenommen werden. Dazu kann insbesondere vorgesehen sein, daß die Lage der Sensoren der verschiedenen Gruppen, für die individuelle Belichtungsmessungen vorgenommen werden, auf einem Bildschirmanzeigegerät dargestellt sind, das auch der Darstellung des Ergebnisses der Röntgenbelichtung dient, und daß die manuelle Auswahl anhand der Darstellung der Lage der Gruppen auf dem Bildschirmanzeigegerät vorgenommen wird. Auf dem Bildschirmanzeigegerät, das der Darstellung der Lage des Belichtungsergebnisses also des späteren Röntgenbildes dient, können die Lage der verschiedenen Gruppen der Sensoren markiert sein. Es kann nun durch manuelle Auswahl angegeben werden, welche Gruppen insbesondere zur Ermittlung der Belichtung herangezogen werden sollen. Dabei kann beispielsweise ein bei geringerer Dosis aufgenommenes Bild verwendet werden, das auf dem Bildschirmanzeigegerät zusammen mit der Lage der Sensorengruppen dargestellt wird. Es können dann leicht manuell die Gruppen ausgewählt werden, die in Bereichen des Untersuchungsobjektes liegen, die in bestimmter Weise zu belichten sind.

Anhand der Zeichnung wird ein Ausführungsbeispiel der Erfindung näher erläutert. Es zeigen:
Fig. 1 Ausschnitte einer Sensormatrix für ein Röntgenuntersuchungsgerät,
Fig. 2 einen Sensor der Matrix gemäß Fig. 1 mit einer Gegenelektrode und einer Ausleseleitung und
Fig. 3 ein Röntgenuntersuchungsgerät mit einer Matrix gemäß Fig. 1.

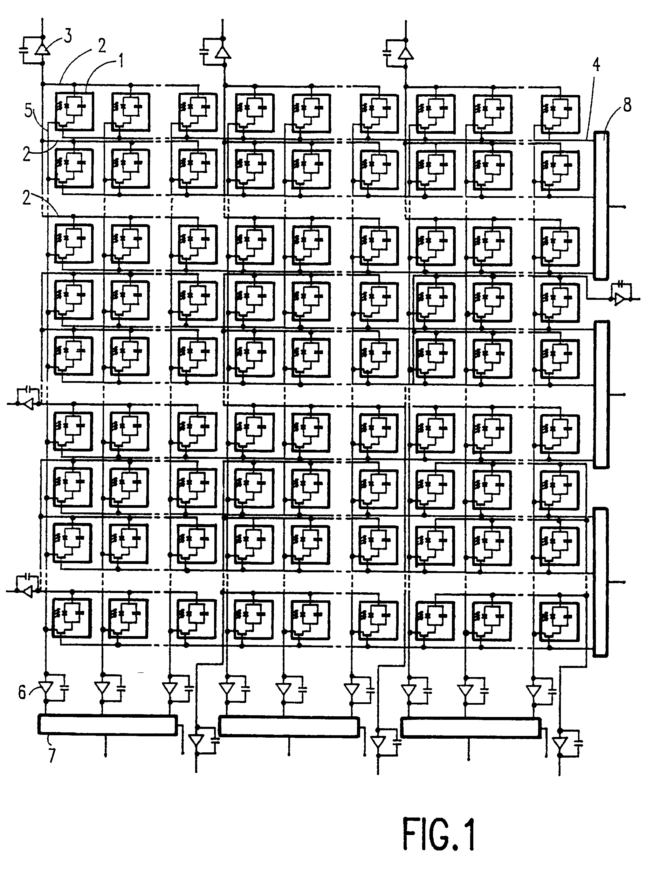

In Fig. 1 ist eine Sensor-Matrix mit in Zeilen und Spalten angeordneten Sensoren 1 dargestellt, die für ein Röntgenuntersuchungsgerät vorgesehen sind. Bei der nur ausschnittsweisen Darstellung gemäß Fig. 1 sind jeweils drei Sensoren je Zeile und je Spalte mit einer gemeinsamen Gegenelektrode 2 versehen. Es kann jedoch selbstverständlich auch eine größere oder kleinere Anzahl von Sensoren eine solche Gruppe bilden. Für jede Gruppe mit einer gemeinsamen Gegenelektrode 2 ist ein in dieser Gegenelektrode angeordneter Verstärker 3 vorgesehen, der dazu dient, die in der Gegenelektrode während der Belichtung fließenden Ströme zu verstärken und einer in der Fig. 1 nicht dargestellten Belichtungsmeßeinrichtung zur Messung und/oder Korrektur der Belichtung zuzuführen.

Nach einer Röntgenbelichtung werden bei der in Fig. 1 dargestellten Matrix alle elektrischen Schalter der Sensoren 1 einer Zeile über eine jeweils zugeordnete Schaltleitung 4 aktiviert, so daß über die elektronischen Schalter der Sensoren 1 dieser Zeile die in den Speicherkapazitäten der Sensoren 1 während der Belichtung gespeicherten Ladungen über Ausleseleitungen 5 abfließen. Für jede Spalte der Sensoren 1 gemäß Fig. 1 ist jeweils eine gemeinsame Ausleseleitung 5 vorgesehen, die jeweils einen Verstärker 6 aufweist, mittels dessen die ausgelesenen Ladungen verstärkt und einem Analogmultiplexer 7 zur weiteren Auswertung zugeführt werden. Die Schaltleitungen 4 werden über digitale Dekoder 8 zeilenweise angesteuert.

Nach einer erfolgten Belichtung werden also die elektrischen Schalter der Sensoren 1 zeilenweise aktiviert und es wird parallel für alle Sensoren 1 einer Zeile über die Ausleseleitungen 5 deren Ladungen ausgelesen. Dieser Vorgang setzt sich über alle Zeilen fort, bis die Ladungen aller Sensoren ausgelesen sind.

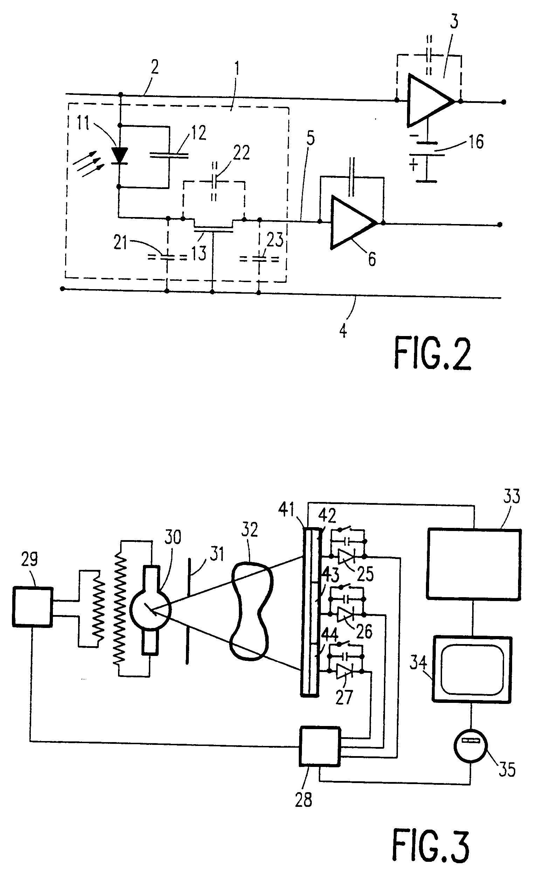

In Fig. 2 ist ein einzelner Sensor der Anordnung gemäß Fig. 1 im Detail dargestellt, wobei auch gestrichelt angedeutete parasitäre Kapazitäten berücksichtigt sind.

Der Sensor 1 weist ein Fotosensorelement 11 auf, welches bei auftreffender Belichtung mit Röntgenstrahlung leitend wird. Dem Fotosensorelement 11 ist eine Speicherkapazität 12 parallel geschaltet, bei der es sich insbesondere um die parasitäre Kapazität des Fotosensorelementes 11 handeln kann. Die Anode des Fotosensorelementes 11 sowie ein Anschluß der Speicherkapazität 12 sind mit einer Gegenelektrode 2 verbunden, welche mit weiteren in der Fig. 2 nicht dargestellten Sensoren verbunden ist. In dem Sensor 1 ist ferner ein elektrischer Schalter 13 vorgesehen, welcher als Feldeffekttransistor ausgeführt ist, dessen Source-Anschluß mit der Kathode des Fotosensorelementes 11 und dem zweiten Anschluß der Speicherkapazität 12 verbunden ist. Der Gate-Anschluß des Schaltelements 13 ist mit einer Schaltleitung 4 verbunden, welche außerdem zu elektrischen Schaltern weiterer in der Fig. nicht dargestellter Sensoren verbunden ist. Der Drain-Anschluß des Schaltelements 13 ist mit einer in der Fig. 2 nur kurz angedeuteten Ausleseleitung 5 verbunden, welche einen Ausleseverstärker 6 aufweist. Mit der Ausleseleitung 5 können weitere, in der Fig. 2 nicht dargestellte Sensoren verbunden sein.

Der elektrische Schalter 13, der in der Fig. als Feldeffekt-Transistor dargestellt ist, weist zwischen jeder seiner drei Anschlüsse wirksame parasitäre Kapazitäten auf. Eine erste parasitäre Kapazität 21 ist zwischen Source- und Gate-Anschluß des elektrischen Schalters 13 wirksam. Eine zweite parasitäre Kapazität 22 ist zwischen den Source- und Drain-Anschlüssen des Schalters 13 und eine dritte parasitäre Kapazität 23 zwischen den Drain- und den Gate-Anschlüssen des Schalters 13 wirksam.

Zur Messung der Belichtung ist in der Gegenelektrode 2 ein Verstärker 3 vorgesehen, der außerdem mit dem negativen Anschluß einer Gleichspannungsquelle 16 verbunden ist, über die die Gegenelektrode 2 negativ vorgespannt ist.

Vor Durchführung einer Röntgenbelichtung wird der elektrische Schalter 13 kurz leitend geschaltet, wodurch die Kathode des Fotosensorelementes 11 nahezu auf Massepotential gebracht wird. Erfolgt nun nachfolgend, bei wieder nicht leitend geschalteten Schalter 13, die Röntgenbelichtung, so wird die Speicherkapazität 12 entladen und der gemeinsame Verbindungspunkt des Fotosensorelementes 11 und der Speicherkapazität 12 am Source-Anschluß des Schalters 13 wird stärker negativ und zwar umso mehr, je stärker die Belichtung für dieses Sensorelement erfolgt ist. Nach erfolgter Belichtung wird der elektrische Schalter 13 über die Schaltleitung 4 aktiviert und die über die Ausleseleitung 5 ausgelesene und mittels des Verstärkers 6 verstärkte Ladung wird nachfolgend zur Ermittlung eines Röntgenbildes in der Fig. nicht dargestellter Weise eingesetzt. Diese Ladung stellt selbstverständlich auch ein Maß für die für den jeweiligen Sensor erfolgte Belichtung dar. Diese Ladung steht jedoch erst nach der erfolgten Belichtung zur Verfügung und kann somit nicht der Belichtungsmessung während der Belichtung dienen.

Es ist daher erfindungsgemäß vorgesehen, die während der Belichtung in der Gegenelektrode 2 und/oder dem elektrischen Schalter 13 fließenden Ströme zur Belichtungsmessung einzusetzen. Die während der Belichtung fließenden Ströme werden durch die parasitären Kapazitäten 21 und 22 des elektrischen Schalters 13 verursacht. Über die Kapazität 21 wird ein Strom in die Gegenelektrode 2 und über Kapazität 22 wird ein Strom in die Ausleseleitung 5 eingekoppelt. Da die Kapazität 21 meist größer ist als die Kapazität 22, ist der während der Belichtung zur Gegenelektrode fließende Strom wesentlich größer als der in die Ausleseleitung fließende Strom und kann somit leichter zur Belichtungsmessung herangezogen werden. Zu diesem Zwecke ist in der Gegenelektrode 2 der Verstärker 3 vorgesehen. Die von dem Verstärker 3 verstärkten Ströme stellen unmittelbar ein Maß der momentanen Intensität der Belichtung des Fotosensorelementes 11 dar und können direkt zur Belichtungsmessung eingesetzt werden.

Es besteht darüber hinaus die Möglichkeit, den während der Belichtung in der Ausleseleitung 5 fließenden Strom einzusetzen, der zwar geringere Werte aufweist als der in der Gegenelektrode 2 fließende Strom, für dessen Verstärkung jedoch der ohnehin vorhandene Ausleseverstärker 6 eingesetzt werden kann.

In Fig. 3 ist ein Röntgenuntersuchungsgerät schematisch angedeutet, das eine Sensormatrix 41 aufweist. Die Sensormatrix 41 ihrerseits weist eine Vielzahl von Gruppen von Sensoren mit gemeinsam vorgesehener Gegenelektrode auf, von denen in der Fig. 3 die Sensorgruppen 42, 43 und 44 mit jeweils einem Verstärker 25, 26 und 27 in der für die jeweiligen Gruppen jeweils vorgesehenen Gegenelektroden dargestellt sind. Die Ausgänge der Verstärker 25, 26 und 27 führen auf eine Belichtungsmeßeinrichtung 28, mittels welcher ein Röntgengenerator 29 gesteuert wird. An den Röntgengenerator 29 ist eine Röntgenlichtquelle 30 angekoppelt, mittels der durch eine Blende 31 hindurch ein Untersuchungsobjekt 32 belichtet wird, hinter dem von der Röntgenlichtquelle 30 aus gesehen, die Sensormatrix 41 angeordnet ist. Zur Gewinnung eines Röntgenbildes sind die in der Fig. 3 nicht näher dargestellten Ausleseleitungen der Sensor-Matrix 41 mit einem Bildprozessor 33 verbunden, dessen Ausgangssignal einer Bildwiedergabeanordnung 34 zugeführt ist. Die Belichtungsmeßeinrichtung 28 ist mit einem Bedienelement 35 verbunden, das seinerseits mit der Bildwiedergabeanordnung 34 gekoppelt ist.

Während einer Belichtung des Untersuchungsobjektes trifft die mittels der Röntgenlichtquelle 30 erzeute Röntgenstrahlung auf das Untersuchungsobjekt 32 und durch dieses hindurch auf die Sensor-Matrix 41. Die in der Sensor-Matrix 41 vorgesehenen, in der Fig. 3 jedoch nicht näher dargestellten Sensoren, werden also mit Röntgenlicht bestrahlt, so daß in den einzelnen Sensoren in Abhängigkeit der Intensität der Belichtung jedes einzelnen Sensors Ladungen in deren Speicherelementen gespeichert werden. Diese Ladungen werden ausgelesen und mittels des Bildprozessors 33 zu einem auf der Bildwiedergabeanordnung 34 dargestellten Röntgenbild aufbereitet.

Es besteht nun der Wunsch, eine Steuerung der Belichtung vornehmen zu können. Dazu werden die in den gemeinsamen Gegenelektroden der Sensorgruppen, von denen in der Fig. 3 die Gruppen 42 und 43 und 44 angedeutet sind, eingesetzt. Die Ströme werden mittels in den Gegenelektroden vorgesehener Verstärker, von denen in der Fig. 3 die Verstärker 25, 26 und 27 angedeutet sind, verstärkt. Diese verstärkten Ströme werden in der Belichtungsmeßeinrichtung 28 ausgewertet. Die Belichtungsmeßeinrichtung 28 kann die Steuerung bzw. Korrektur der Belichtung ihrerseits automatisch vornehmen und dabei beispielsweise auf früher angelegte Bewertungstabellen zurückgreifen. Es können dabei für verschiedene Untersuchungsarten jeweils angepaßte Bewertungstabellen vorgesehen sein. Da der Belichtungsmeßeinrichtung 28 die während der Belichtung in den verschiedenen Sensorgruppen fließenden Ströme für jede Sensorgruppe einzeln zugeführt werden, kann die Einrichtung 28 eine individuelle Messung der Belichtung für jede einzelne Sensorgruppe vornehmen. Bei der automatischen Belichtungskorrektur können dabei je nach Untersuchungsart bestimmte Gruppen bezüglich der gewünschten Belichtung stärker gewichtet werden als andere Gruppen.

Es besteht darüber hinaus auch die Möglichkeit, mittels der Bedieneinheit 35 vorzugeben, welche der verschiedenen individuellen Belichtungsmessungen der Sensorengruppen stärker gewichtet werden sollen. Dazu kann in die Bilddarstellung der Bildwiedergabeanordnung 34 die Lage der verschiedenen Sensorgruppen eingeblendet sein, so daß direkt erkennbar ist, welche Lage die Gruppen haben und welche Sensorgruppen stärker bzw. schwächer gewichtet werden sollen.

Um die relative Lage der Sensorgruppen zu dem Untersuchungsobjekt 32 weiter zu verdeutlichen, kann ein mit einer geringeren Strahlendosis erzeugtes Vorbild erzeugt werden, anhand dessen Darstellung auf dem Bildschirmanzeigegerät 34 die Auswahl der Sensorgruppen für die Belichtungsmessung bzw. Korrektur noch weiter vereinfacht wird.

## Patentansprüche

1. Röntgenuntersuchungsgerät mit einer Sensor-Matrix (21) mit in Zeilen und Spalten angeordneten Sensoren (1), die je ein röntgenstrahlenempfindliches Fotosensorelement (11), eine diesem parallel geschaltete Speicherkapazität (12) und einen elektrischen Schalter (13) aufweisen, wobei die Fotosensorelemente (11) und die Speicherkapazitäten (12), jeweils mit ihren ersten Elektroden an einer mit einer Gleichspannungsquelle (16) verbundenen Gegenelektrode (2) und mit ihren zweiten Elektroden **an** **den** elektrischen Schalter (13) angeschlossen sind, wobei jeder Schalter (13) zwischen seinen Anschlüssen wirksame parasitäre Kapazitäten (21, 22) aufweist, und mit einem Steuerorgan (8) zur Steuerung der Schalter (13), derart daß die Schalter (13) vor Durchführung einer Röntgenbelichtung zur Voreinstellung der Sensoren (1) kurzzeitig leitend geschaltet und während der Röntgenbelichtung nichtleitend geschaltet werden, **wobei weiter** nach der Röntgenbelichtung die Ladungen der Speicherkapazitäten (12) über die Schalter (13) mittels Ausleseleitungen (5) ausgelesen werden **und** wobei eine Belichtungsmeßeinrichtung (28) vorgesehen ist, welcher nach dem kurzzeitigen leitend Schalten der elektrischen Schalter (13) und vor dem Auslesen der Ladungen während Durchführung einer Röntgenbelichtung die wegen der parasitären Kapazitäten (21, 22) zur Gegenelektrode(n) (2) und/oder zu den Ausleseleitungen (5) fließenden Ströme zur Messung der Belichtung und/oder Korrektur der Belichtungseinstellung zugeführt werden.

2. Röntgenuntersuchungsgerät nach Anspruch 1,
dadurch gekennzeichnet, daß jeweils eine vorgegebene Anzahl von Sensoren (1) einer Spalte der Matrix eine Gruppe bildet, daß für jede Gruppe eine gemeinsame Ausleseleitung (5) mit je einem Ausleseverstärker (6) für die Ladungsauslesung vorgesehen ist, und daß die Ausleseverstärker (6) auch zur Messung der während der Belichtung fließenden Ströme herangezogen werden, die der Belichtungsmessung und/oder der Belichtungskorrektur dienen.

3. Röntgenuntersuchungsgerät nach Anspruch 2,
dadurch gekennzeichnet, daß jeweils alle Sensoren (1) einer Spalte der Matrix eine Gruppe mit einer gemeinsamen Ausleseleitung (5) und einem Ausleseverstärker (6) bilden.

4. Röntgenuntersuchungsgerät nach Anspruch 1,
dadurch gekennzeichnet, daß jeweils eine vorgegebene Anzahl von Sensoren eine Gruppe bildet und daß für jede Gruppe eine gemeinsame Gegenelektrode (2) vorgesehen ist, an die jeweils ein Verstärker (3) geschaltet ist, mittels dessen während der Röntgenbelichtung die jeweils in den Gegenelektroden (2) fließenden Ströme gemessen werden, die der Belichtungsmessung und/oder der Belichtungskorrektur dienen.

5. Röntgenuntersuchungsgerät nach Anspruch 4,
dadurch gekennzeichnet, daß die vorgegebene Anzahl von Sensoren (1) jeder Gruppe, für die jeweils eine gemeinsame Gegenelektrode (2) vorgesehen ist, zwischen zwei mal zwei und acht mal acht beträgt.

6. Röntgenuntersuchungsgerät nach einem der Ansprüche 2 bis 5,
dadurch gekennzeichnet, daß für jede Gruppe von Sensoren mit einer gemeinsamen Ausleseleitung (5) bzw. einer gemeinsamen Gegenelektrode (2) eine individuelle Belichtungsmessung vorgesehen ist.

7. Röntgenuntersuchungsgerät nach einem der Ansprüche 1 bis 6,
dadurch gekennzeichnet, daß eine Steuereinrichtung (28) vorgesehen ist, welche in Abhängigkeit der Belichtungsmessung bzw. der individuellen Belichtungsmessungen eine Steuerung der Belichtungsintensität und/oder der Belichtungsdauer vornimmt.

8. Röntgenuntersuchungsgerät nach Anspruch 7, wenn rückbezogen auf Anspruch 6,
dadurch gekennzeichnet, daß in der Steuereinrichtung (28) die individuellen Belichtungsmessungen je nach Lage der Sensoren (1) der verschiedenen Gruppen verschieden gewichtet werden.

9. Röntgenuntersuchungsgerät nach Anspruch 8,
dadurch gekennzeichnet, daß die Steuereinrichtung (28) bei der Gewichtung der verschiedenen individuellen Belichtungsmessungen je nach vorgegebener Untersuchungsart auf eine auf diese Untersuchung zuvor angepaßte Bewertungstabelle zurückgreift.

10. Röntgenuntersuchungsgerät nach Anspruch 8,
dadurch gekennzeichnet, daß die verschiedenen Gewichtungen der individuellen Belichtungsmessungen durch manuelle Auswahl vorgenommen werden.

11. Röntgenuntersuchungsgerät nach Anspruch 10,
dadurch gekennzeichnet, daß die Lage der Sensoren (1) der verschiedenen Gruppen, für die individuelle Belichtungsmessungen vorgenommen werden, auf einem Bildschirmanzeigegerät (34) dargestellt sind, das auch der Darstellung des Ergebnisses der Röntgenbelichtung dient, und daß die manuelle Auswahl anhand der Darstellung der Lage der Gruppen auf dem Bildschirmanzeigegerät (34) vorgenommen wird.

## Claims

1. An X-ray examination apparatus, comprising a sensor matrix (21) with sensors (1) which are arranged in rows and columns and each of which comprises an X-ray sensitive photosensor element (11), a storage capacitance (12) connected parallel thereto, and an electric switch (13), the first electrodes of said photosensor elements (11) and storage capacitances (12) being connected to a counter-electrode (2) which is connected to a direct voltage source (16), their second electrodes being connected to the electric switch (13), each switch (13) having stray capacitances (21, 22) acting between its terminals, and comprising a control member (8) for controlling the switches 913) so that prior to an X-ray exposure the switches (13) are briefly switched to the conductive state in order to bias the sensors (1) whereas they are switched to the non-conductive state during the X-ray exposure, the charges of the storage capacitances (12) being read, *via* the switches (13), by means of read lines (5) after the X-ray exposure, and there being provided an exposure measuring device (28) which receives, after the brief switching to the conductive state of the electric switches (13) and before the reading of the charges, the currents flowing to the counter-electrode (electrodes) (2) and/or to the read lines (5) because of the stray capacitances (21, 22) during execution of an X-ray exposure in order to measure the exposure and/or to correct the exposure setting.

2. An X-ray examination apparatus as claimed in Claim 1, characterized in that a predetermined number of sensors (1) of a column of the matrix forms a group, for each group there being provided a common read line (5) with a respective read amplifier (6) for reading the charge, the read amplifiers (6) also being used to measure the currents flowing during the exposure and serving for exposure measurement and/or exposure correction.

3. An X-ray examination apparatus as claimed in Claim 2, characterized in that all sensors (1) of a column of the matrix form a respective group comprising a common read line (5) and a read amplifier (6).

4. An X-ray examination apparatus as claimed in Claim 1, characterized in that a predetermined number of sensors form a respective group, for each group there being provided a common counter-electrode (2) whereto there is connected a respective amplifier (3) *via* which there are measured the currents flowing in the respective counter-electrodes (2) during the X-ray exposure and serving for exposure measurement and/or exposure correction.

5. An X-ray examination apparatus as claimed in Claim 4, characterized in that the predetermined number of sensors (1) of each group for which a respective common counter-electrode (2) is provided amounts to from two times two to eight times eight.

6. An X-ray examination apparatus as claimed in any one of the Claims 2 to 5, characterized in that an individual exposure measurement is carried out for each group of sensors comprising a common read line (5) or a common counter-electrode (2).

7. An X-ray examination apparatus as claimed in any one of the Claims 1 to 6, characterized in that there is provided a control unit (28) which controls the exposure intensity and/or the exposure duration in dependence on the exposure measurement or the individual exposure measurements.

8. An X-ray examination apparatus as claimed in Claim 7, related to Claim 6, characterized in that the individual exposure measurements are weighted differently in the control device (28) in dependence on the position of the sensors (1) of the various groups.

9. An X-ray examination apparatus as claimed in Claim 8, characterized in that for the weighting of the various individual exposure measurements in dependence on the relevant type of examination, the control device (28) utilizes a weighting table which has been composed in advance for the relevant type of examination.

10. An X-ray apparatus as claimed in Claim 8, characterized in that the various weights for the individual exposure measurements are obtained by manual selection.

11. An X-ray examination apparatus as claimed in Claim 10, characterized in that the positions of the sensors (1) of the various groups for which the individual exposure measurements are carried out are displayed on an image display device (34) which also serves to display the results of the X-ray exposure, the manual selection being carried out on the basis of the display of the positions of the groups on the image display device (34).

## Revendications

1. Appareil d'examen radiographique comportant une matrice de capteurs (21) contenant des capteurs (1) disposés en lignes et en colonnes, qui comprennent chacun un élément photocapteur (11) sensible aux rayons X, une capacité de stockage (12) connectée en parallèle à cet élément et un commutateur électrique (13), les éléments photocapteurs (11) et les capacités de stockage (12) étant respectivement connectés, par leurs premières électrodes, à une contre-électrode (2) connectée à une source de tension continue (16) et, par leurs deuxièmes électrodes, aux commutateurs électriques (13), chaque commutateur (13) présentant, entre ses bornes, des capacités parasites actives (21, 22), et un organe de commande (8) pour commander les commutateurs (13), de telle sorte que les commutateurs (13) soient commutés à l'état conducteur pendant un bref intervalle avant la réalisation d'une radioexposition pour prérégler les capteurs (1) et soient commutés à l'état non conducteur au cours de la radioexposition, étant entendu qu'en outre, après la radioexposition, les charges des capacités de stockage (12) sont lues via les commutateurs (13) par des lignes de lecture (5), et qu'un dispositif de mesure de l'exposition (28) est prévu pour, après la brève commutation sur conduction des commutateurs électriques (13) et avant la lecture des charges au cours de la réalisation d'une radioexposition, acheminer les courants s'écoulant par les capacités parasites (21, 22) à la ou aux contre-électrode(s) (2) et/ou aux lignes de lecture (5) pour mesurer l'exposition et/ou corriger son réglage.

2. Appareil d'examen radiographique selon la revendication 1, caractérisé en ce qu'un nombre prédéterminé de capteurs (1) d'une colonne de la matrice forme chaque fois un groupe, que, pour chaque groupe, il y a une ligne de lecture commune (5) avec, respectivement, un amplificateur de lecture (6) pour la lecture des charges, et que les amplificateurs de lecture (6) sont utilisés également pour la mesure des courants qui passent au cours de l'exposition, ces courants servant à mesurer et/ou à corriger l'exposition.

3. Appareil d'examen radiographique selon la revendication 2, caractérisé en ce que tous les capteurs (1) d'une colonne de la matrice forment chaque fois un groupe avec une ligne de lecture commune (5) et un amplificateur de lecture (6).

4. Appareil d'examen radiographique selon la revendication 1, caractérisé en ce qu'un nombre prédéterminé de capteurs forme chaque fois un groupe et, pour chaque groupe, il est prévu une contre-électrode commune (2) à laquelle est connecté respectivement un amplificateur (3), qui permet, au cours de la radioexposition, de mesurer respectivement les courants qui s'écoulent dans les contre-électrodes (2) et qui servent à mesurer et/ou à corriger l'exposition.

5. Appareil d'examen radiographique selon la revendication 4, caractérisé en ce que le nombre prédéterminé de capteurs (1) pour lesquels est chaque fois prévue une contre-électrode commune (2), est compris entre deux fois deux et huit fois huit.

6. Appareil d'examen radiographique selon l'une quelconque des revendications 2 à 5, caractérisé en ce qu'une mesure individuelle de l'exposition est prévue pour chaque groupe de capteurs ayant une ligne de lecture commune (5) ou une contre-électrode commune (2).

7. Appareil d'examen radiographique selon l'une quelconque des revendications 1 à 6, caractérisé en ce qu'il est prévu un dispositif de commande (28) qui assure la commande de l'intensité et/ou de la durée de l'exposition en fonction de la mesure de l'exposition ou des mesures d'exposition individuelles.

8. Appareil d'examen radiographique selon la revendication 7, découlant de la revendication 2, caractérisé en ce que, dans le dispositif de commande (28), les mesures individuelles de l'exposition sont diversement pondérées en fonction de la situation des capteurs (1) des divers groupes.

9. Appareil d'examen radiographique selon la revendication 8, caractérisé en ce que le dispositif de commande (28), lors de la pondération des diverses mesures d'exposition individuelles, se réfère, en fonction du type d'examen prédéterminé, à une table d'évaluation préalablement adaptée à cet examen.

10. Appareil d'examen radiographique selon la revendication 8, caractérisé en ce que les diverses pondérations des mesures d'exposition individuelles sont faites par sélection manuelle.

11. Appareil d'examen radiographique selon la revendication 10, caractérisé en ce que la situation des capteurs (1) des divers groupes, pour lesquels des mesures d'exposition individuelles sont effectuées, est représentée dans un appareil d'affichage vidéo (34), qui sert également à représenter le résultat de la radioexposition, et la sélection manuelle est faite sur base de la représentation de la situation des groupes sur l'appareil d'affichage vidéo (34).
